# EUROPÄISCHE PATENTSCHRIFT

(11) **EP 3 687 916 B1**
(45) Veröffentlichungstag und Bekanntmachung des Hinweises auf die Patenterteilung: **22.09.2021**
(21) Anmeldenummer: 18759039.3
(22) Anmeldetag: 31.07.2018
(51) Int. Cl.: B65D 41/28, B65D 81/38, B65D 45/32

(54) **BEHÄLTER MIT VERSCHLUSSEINRICHTUNG UND DECKEL**
CONTAINER COMPRISING A CLOSURE DEVICE AND COVER
CONTENANTS POURVUS D'UN DISPOSITIF DE FERMETURE ET D'UN COUVERCLE

(30) Priorität: 27.09.2017 DE 102017217247
(43) Veröffentlichungstag der Anmeldung: 05.08.2020
(73) Patentinhaber: WMF Group GmbH, 73312 Geislingen/Steige (DE)
(72) Erfinder: ABELE, Werner, 89558 Böhmenkirch (DE)
(74) Vertreter: Pfenning, Meinig & Partner mbB
(86) Internationale Anmeldenummer: PCT/EP2018/070808
(87) Internationale Veröffentlichungsnummer: WO 2019/063164

(56) Entgegenhaltungen:
- EP-A1- 0 237 594
- WO-A1-2008/019443
- DE-C- 567 569
- US-A- 2 765 960

## Beschreibung

Die vorliegende Erfindung betrifft einen Behälter mit einer Verschlusseinrichtung und einem Deckel, insbesondere Isolierflaschen, Isolierbecher, Isolierbehälter sowie Vorratsbehälter mit und ohne Isolierfunktion, wobei die Verschlusseinrichtung den Deckel hält.

Aus dem Stand der Technik sind bereits einige Behälter bekannt, die eine Verschlusseinrichtung zum Halten des Deckels aufweisen.

EP 0 237 594 A1 betrifft eine Isolierkanne a) mit einem Innenbehälter, b) mit einem Außenbehälter aus schlagfestem Kunststoff, c) mit einem KunststoffSchaum zwischen dem Innenbehälter und dem Außenbehälter, und d) mit einem auf der Auslassöffnung befestigbaren Deckel aus Kunststoff, gekennzeichnet durch die folgenden Merkmale: e) der Innenbehälter besteht aus Edelstahl; und f) der Deckel weist einen nach unten ragenden, stegförmigen Randbereich auf, der über eine Nut/Feder-Verbindung in Eingriff mit dem oberen Randbereich des Innenbehälters bringbar ist.

US 2,765,960 betrifft einen wiederverwendbaren haltenden Verschluss für Behälter, insbesondere geformte Plastikschutzverschlüsse, die auf Ausgussbehältern aus Stahl angewendet werden, um unbeabsichtigtes Umkippen und versehentliches Entladen des Behälterinhaltes zu vermeiden.

WO 97/04696 A2 beschreibt eine Verschlusseinrichtung an Behältern, vorzugsweise zum Abteilen für Fluide, aufweisend einen Verschlussdeckel, der mit Befestigungsmitteln an dem Behälter lösbar festlegbar ist und in einer Füllstellung eine Öffnung in das Innere des Behälters freigibt, am Verschlussdeckel angeordnete Verschlusselemente, die mit zugehörigen behälterseitigen Formelementen in einer Schließstellung die Behälteröffnung dichtend abschließen, an dem Verschlusselement lösbar angeordnete Betätigungselemente, die die Verschlusselemente aus der Schließstellung in eine Öffnungsstellung bewegen, dadurch gekennzeichnet, dass das Verschlusselement aus einer kuppelförmig gewölbten, elastisch verformbaren Membran besteht, die nach Festlegen des Verschlussdeckels an der Behälteröffnung an zumindest eine umlaufende Dichtungskante der zugehörigen behälterseitigen Formelemente angepresst ist, und die zum Öffnen durch die Betätigungselemente zumindest abschnittsweise nahe der Dichtungskante derart verformbar ist, dass die Membran zumindest entlang von Teilbereichen der umlaufenden Dichtungskante von dieser Dichtungskante abhebbar ist.

Die DE 567 569 betrifft eine Vorrichtung zum Befestigen des Bechers bei Isolierflaschen mit innerhalb des Bechers an diesem vorgesehenen Befestigungsteilen, wobei die Befestigungsteile des Bechers mit entsprechenden Befestigungsteilen zusammenwirken, die an dem Verschluss der Flasche angeordnet sind.

Häufig werden Behälter, wie Isolierkannen, mit einem Schraubverschluss verschlossen. Dies führt allerdings zu Beschränkungen in der Materialwahl, da beispielsweise bei der interessanten Materialkombination Edelstahl-Edelstahl unangenehme Quietschgeräusche auftreten oder sogar mit einer Schädigung des Gewindes zu rechnen ist. Weiterhin weisen die bekannten Isolierflaschen aus Edelstahl, die einen Deckel mit einem Außenteil aus Edelstahl und einem Innenteil aus Kunststoff aufweisen, häufig einen außen sichtbaren Kunststoffrand auf.

Davon ausgehend war es Aufgabe der vorliegenden Erfindung einen Behälter bereitzustellen, der keinen Schraubverschluss zum Halten des Deckels benötigt und möglichst wenigen Einschränkungen bezüglich der Materialwahl unterliegt. Weiterhin soll vermieden werden, dass Teile der Befestigungseinrichtung des Deckels außen am Behälter sichtbar sind.

Diese Aufgabe wird durch einen Behälter mit den folgenden Merkmalen gemäß Anspruch 1 gelöst:
Behälter mit einer Verschlusseinrichtung und einem Deckel, wobei die Verschlusseinrichtung einen oberen Querschnitt aufweist, der im Wesentlichen rund, dreieckig oder mehreckig ausgeformt ist; und
wobei dieser obere Querschnitt in einen unteren, nicht-runden Querschnitt übergeht, der durch n Ecken und durch n diese Ecken verbindenden bogenförmige Linien, definiert wird;
wobei n eine ganze Zahl von 2 bis 6 ist;
wobei die Ecken axial betrachtet über den im Wesentlichen runden, dreieickigen oder mehreckigen oberen Querschnitt hervorstehen und die bogenförmigen Linien axial betrachtet hinter dem im Wesentlichen runden, dreieckigen oder mehreckigen oberen Querschnitt zurückstehen;
wobei an der Verschlusseinrichtung, im Bereich des unteren Querschnitts, mindestens zwei Halteelemente angeordnet sind;
wobei der Deckel eine Aufnahmevorrichtung für die Haltelement der Verschlusseinrichtung aufweist, die gewährleisten, dass der Deckel durch die Verschlusseinrichtung gehalten wird; und
wobei der Behälter eine im Wesentlichen runde Öffnung aufweist, in welche die Verschlusseinrichtung in geschlossenem Zustand des Behälters eingreift.

Bevorzugte Ausführungsformen des erfindungsgemäßen Behälters werden in den abhängigen Ansprüchen 2 bis 13 angegeben.

### Begriffsdefinitionen

Der Ausdruck "im Wesentlichen rund" im Sinne der vorliegenden Erfindung meint, dass geringe Abweichungen von einer kreisförmigen Geometrie zulässig sind, d.h. die Geometrie ist nicht mehr genau kreisförmig. So können beispielsweise Ecken und Kanten vorhanden sein oder die Geometrie kann elliptisch verzerrt sein. Bevorzugt ist es aber, dass eine kreisförmige Geometrie vorliegt.

"Bogenförmige Linien" bezüglich der Definition des unteren Querschnitts der Verschlusseinrichtung bedeutet im Sinne der vorliegenden Erfindung, dass die n Ecken nicht über Geraden verbunden werden, sondern, dass die verbindenden Linien eine leichte Biegung aufweisen. Der notwendige Grad der Biegung wird unter anderem vom gewählten Kunststoff und der Größe des Bauteils bestimmt. Die Biegung muss zumindest so groß sein, dass die Geometrie der Verschlusseinrichtung weniger starr ist und so eine leichtere Deformation erlaubt, was beim Verschließen des Behälters von Vorteil ist.

Der "untere Querschnitt" der Verschlusseinrichtung meint im Sinne der vorliegenden Erfindung den Querschnitt auf der Höhe der Verschlusseinrichtung auf der die Haltelemente angeordnet sind und nicht den untersten Teil, der in den Behälter eingreift.

Eine alternative Definition des unteren Querschnitts sieht vor, dass dieser n-eckig ausgeformt ist, wobei die n Ecken abgerundet sind und einen nicht verschwindenden Krümmungsradius aufweisen und wobei die Kanten des n-Ecks einen endlichen Krümmungsradius haben.

Gemäß dieser alternativen Definition weist der erfindungsgemäße Behälter dann die folgenden Merkmale auf.

Behälter mit einer Verschlusseinrichtung und einem Deckel, wobei die Verschlusseinrichtung einen oberen Querschnitt aufweist, der im Wesentlichen rund, dreieckig oder mehreckig ausgeformt ist; und
wobei dieser obere Querschnitt in einen unteren, nicht-runden Querschnitt übergeht, der n-eckig ausgeformt ist, wobei die n Ecken abgerundet sind und einen nicht verschwindenden Krümmungsradius aufweisen und wobei die Kanten des n-Ecks einen endlichen Krümmungsradius haben;
wobei n eine ganze Zahl von 2 bis 6 ist;
wobei die Ecken axial betrachtet über den im Wesentlichen runden, dreieickigen oder mehreckigen oberen Querschnitt hervorstehen und die konvexen Kanten des n-Ecks axial betrachtet hinter dem im Wesentlichen runden, dreieckigen oder mehreckigen oberen Querschnitt zurückstehen;
wobei an der Verschlusseinrichtung, im Bereich des unteren Querschnitts, mindestens zwei Halteelemente angeordnet sind;
wobei der Deckel eine Aufnahmevorrichtung für die Haltelement der Verschlusseinrichtung aufweist, die gewährleisten, dass der Deckel durch die Verschlusseinrichtung gehalten wird; und
wobei der Behälter eine im Wesentlichen runde Öffnung aufweist, in welche die Verschlusseinrichtung in geschlossenem Zustand des Behälters eingreift.

Im Folgenden werden bevorzugte Ausführungsformen des erfindungsgemäßen Behälters definiert.

Eine bevorzugte Ausführungsform sieht vor, dass die Verschlusseinrichtung zwei Halteelemente aufweist, die bevorzugt an gegenüberliegenden Seiten der Verschlusseinrichtung angeordnet sind.

Eine weitere bevorzugte Ausführungsform vorliegender Erfindung sieht vor, dass es sich bei den Haltelementen um Haltestege handelt. Weiterhin ist es bevorzugt, dass es sich bei den Aufnahmevorrichtungen um Nute handelt. Besonders bevorzugt ist, dass es sich bei den Haltelementen um Haltestege und bei den Aufnahmevorrichtungen um Nute handelt.

Gemäß einer weiteren bevorzugten Ausführungsform der vorliegenden Erfindung entspricht die Zahl der Haltelemente der Zahl der Ecken.

Eine andere bevorzugte Ausführungsform vorliegender Erfindung sieht vor, dass der obere Querschnitt im Wesentlichen rund ausgeformt ist und, dass es sich bei der Aufnahmevorrichtung um eine umlaufende Nut handelt.

Nach einer weiteren bevorzugten Ausführungsform vorliegender Erfindung greift der in die Aufnahmevorrichtung eingreifende Teil des Haltelements in geschlossenem Zustand des Behälters über eine Tiefe von 0,3 bis 1,5 mm und bevorzugt 0,5 bis 1 mm in die Aufnahmevorrichtung ein.

Eine andere bevorzugte Ausführungsform sieht vor, dass der in die Aufnahmevorrichtung eingreifende Teil des Haltelements in geschlossenem Zustand des Behälters über 5 bis 60 % und bevorzugt 20 bis 40 % der Gesamtumfangslänge in die Aufnahmevorrichtung eingreift.

Besonders bevorzugt ist es, dass der in die Aufnahmevorrichtung eingreifende Teil des Haltelements in geschlossenem Zustand des Behälters über eine Tiefe von 0,3 bis 1,5 mm und bevorzugt 0,5 bis 1 mm und über 5 bis 60 % und bevorzugt 20 bis 40 % der Gesamtumfangslänge in die Aufnahmevorrichtung eingreift.

Eine weitere bevorzugte Ausführungsform vorliegender Erfindung sieht vor, dass n im Bereich von 3 bis 6 und bevorzugt im Bereich von 3 bis 5 liegt, besonders bevorzugt ist n 4.

Nach einer anderen bevorzugten Ausführungsform ist die Verschlusseinrichtung vollständig im Inneren des Deckels angeordnet, so dass diese von außen nicht sichtbar ist.

Gemäß einer anderen bevorzugten Ausführungsform vorliegender Erfindung enthält die Verschlusseinrichtung einen Kunststoff und besteht vorzugsweise aus diesem, dabei ist der Kunststoff besonders bevorzugt ausgewählt aus der Gruppe bestehend aus Acetalharzen, flüssigkristallinen Polymeren, Polyacrylaten, Polymethacrylaten, olefinischen und cycloolefinischen Polymeren, Polyamiden, Polyamidelastomeren, Polyamidimiden, Polyarylethern beeinhaltend Polyphenylether, Polycarbonaten, Polyimiden, Polyestern, Polyester-Polycarbonaten, Polyethern, Polyoxyethylenen, Polysulfonen, Polystyrol, vinylischen Polymeren oder Mischungen hiervon.

Eine weitere bevorzugte Ausführungsform vorliegender Erfindung sieht vor, dass der obere Querschnitt der Verschlusseinrichtung kreisförmig ist. Weiterhin ist es bevorzugt, dass auch die Öffnung des Behälters kreisförmig ist.

Nach einer weiteren bevorzugten Ausführungsform bestehen der Behälter und/oder der Deckel aus Edelstahl, besonders bevorzugt ist, dass sowohl der Behälter als auch der Deckel aus Edelstahl bestehen.

Eine andere bevorzugte Ausführungsform sieht vor, dass der Deckel in Form eines Bechers ausgebildet ist, wobei dieser Becher besonders bevorzugt doppelwandig ist.

Eine weitere bevorzugte Ausführungsform vorliegender Erfindung sieht vor, dass der Behälter ausgewählt ist aus der Gruppe bestehend aus Isolierflaschen, Isolierbechern (Commuter Mug), Isolierbehältern, z.B. ein Henkelmann, Vorratsbehältern mit und ohne Isolierfunktion.

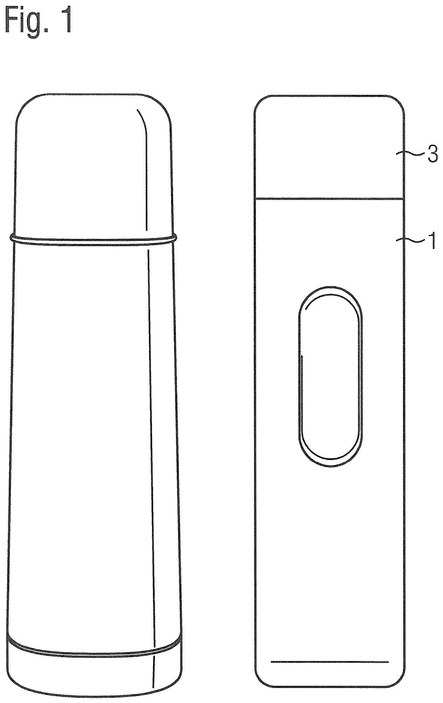

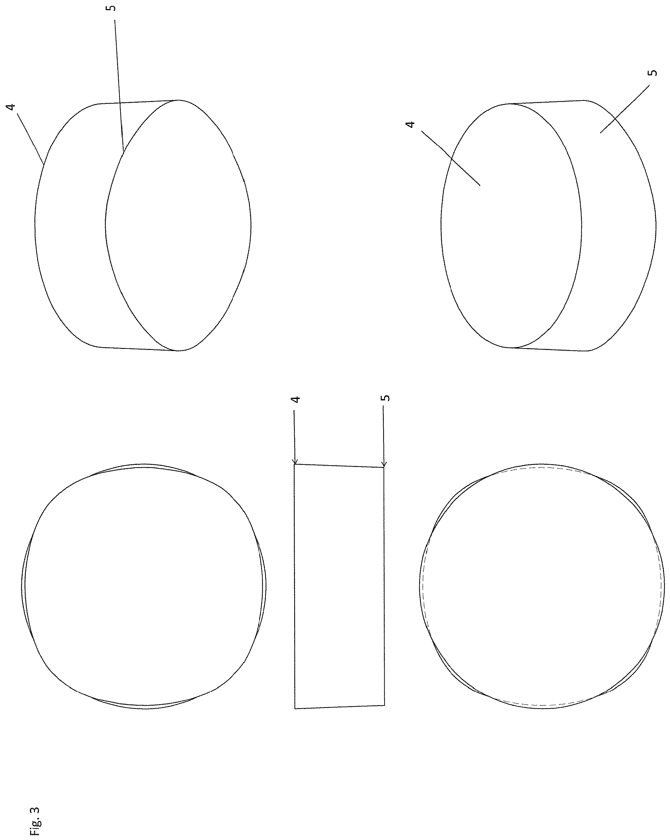

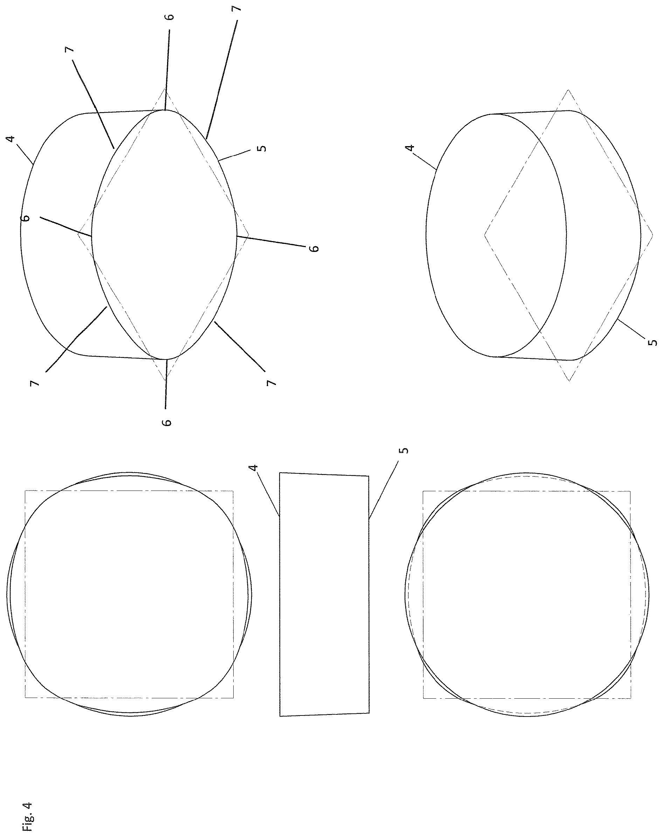

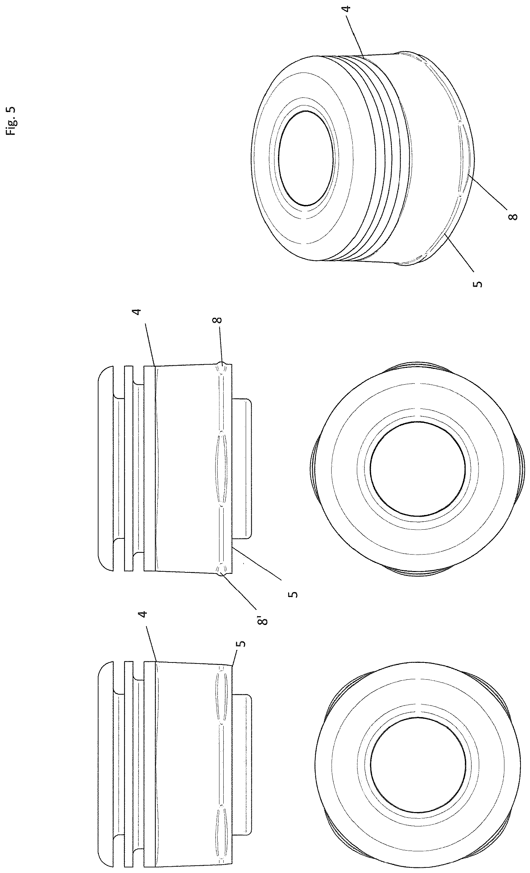

Die nachfolgenden Figuren 1 bis 5 sollen die vorliegende Erfindung an Hand einer Isolierkanne, als Beispiel für den erfindungsgemäßen Behälter, illustrieren, sind aber in keiner Weise als einschränkend zu werten.

Die linke Seite von Figur 1 zeigt die Außenansicht eines Behälters aus dem Stand der Technik mit einem sichtbaren Kunststoffrand. Die rechte Seite dieser Figur bildet die Außenansicht des erfindungsgemäßen Behälters 1 ab, wohingegen keine Teile der Verschlusseinrichtung von außen sichtbar sind.

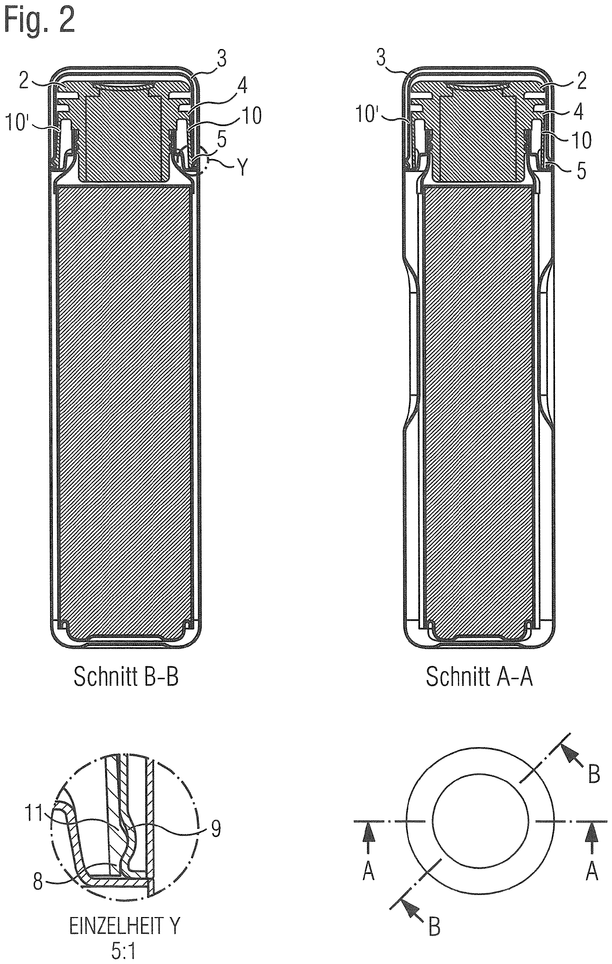

Figur 2 zeigt Schnitte des erfindungsgemäßen Behälters 1 mit Deckel 3 und Verschlusseinrichtung 2. Aus der Vergrößerung Y ist ersichtlich wie das Haltelement 8 mit dem eingreifenden Teil 11 in die Aufnahmevorrichtung 9 eingreift und so ein Halten des Deckels 3 gewährleistet. Beim Aufsetzen und Verschließen des Deckels 3 wird der untere Querschnitt 5 der Verschlusseinrichtung 2 in einen annähernd runden Querschnitt deformiert, wodurch ein Überwinden der Halteelemente 8 ermöglicht wird. Beim Einrasten der Halteelemente 8 in die Aufnahmevorrichtung 9 nimmt der untere Querschnitt 5 der Verschlusseinrichtung 2 wieder seine ursprünglich Form an, wodurch der Deckel 3 am Behälter 1 gehalten wird.

Die Figuren 3 und 4 beschreiben die Flächengeometrie eines oberen im Wesentlichen runden Querschnitts 4 und des unteren Querschnitts 5 der Verschlusseinrichtung 2.

Figur 5 bildet eine Verschlusseinrichtung 2 gemäß vorliegender Erfindung ab, die Haltelemente 8 sind in diesem Fall stegförmig ausgebildet.

### Bezugszeichenliste:

- 1:: Behälter
- 2:: Verschlusseinrichtung
- 3:: Deckel
- 4:: oberer Querschnitt der Verschlusseinrichtung
- 5:: unterer Querschnitt der Verschlusseinrichtung
- 6:: Ecken
- 7:: bogenförmigen Linien
- 8:: Halteelement
- 9:: Aufnahmevorrichtung
- 10:: Seiten der Verschlusseinrichtung
- 11:: eingreifender Teil des Halteelements

## Patentansprüche

1. Behälter (1) mit einer Verschlusseinrichtung (2) und einem Deckel (3), wobei
die Verschlusseinrichtung (2) einen oberen Querschnitt (4) aufweist, der im Wesentlichen rund, dreieckig oder mehreckig ausgeformt ist; und
wobei an der Verschlusseinrichtung (2), im Bereich des unteren Querschnitts (5), mindestens zwei Halteelemente (8,8') angeordnet sind;
wobei der Deckel (3) eine Aufnahmevorrichtung (9,9') für die Haltelemente (8,8') der Verschlusseinrichtung (2) aufweist, die gewährleisten, dass der Deckel (3) durch die Verschlusseinrichtung (2) gehalten wird; und
wobei der Behälter (1) eine im Wesentlichen runde Öffnung aufweist, in welche die Verschlusseinrichtung (2) in geschlossenem Zustand des Behälters (1) eingreift,
**dadurch gekennzeichnet, dass** der obere Querschnitt (4) in einen unteren, nicht-runden Querschnitt (5) übergeht, der durch n Ecken (6) und durch n diese Ecken verbindende bogenförmige Linien (7), definiert wird, wobei n eine ganze Zahl von 2 bis 6 ist;
wobei die Ecken (6) axial betrachtet über den im Wesentlichen runden, dreieckigen oder mehreckigen oberen Querschnitt (4) hervorstehen und die bogenförmigen Linien (7) axial betrachtet hinter dem im Wesentlichen runden, dreieckigen oder mehreckigen oberen Querschnitt (4) zurückstehen.

2. Behälter gemäß Anspruch 1, **dadurch gekennzeichnet, dass**
die Verschlusseinrichtung (2) zwei Halteelemente (8,8') aufweist, die bevorzugt an gegenüberliegenden Seiten (10,10') der Verschlusseinrichtung (2) angeordnet sind.

3. Behälter gemäß Anspruch 1 oder 2, **dadurch gekennzeichnet, dass**
es sich bei den Haltelementen (8,8') um Haltestege handelt; und/oder
es sich bei den Aufnahmevorrichtungen (9,9') um Nute handelt;
wobei es bevorzugt ist, dass es sich bei den Haltelementen (8,8') um Haltestege und bei den Aufnahmevorrichtungen (9,9') um Nute handelt.

4. Behälter nach einem der vorhergehenden Ansprüche, **dadurch gekennzeichnet, dass**
die Zahl der Haltelemente (8,8') der Zahl der Ecken (6) entspricht.

5. Behälter nach einem der vorhergehenden Ansprüche, **dadurch gekennzeichnet, dass**
der obere Querschnitt (4) im Wesentlichen rund ausgeformt ist und, dass es sich bei der Aufnahmevorrichtung um eine umlaufende Nut handelt.

6. Behälter gemäß einem der vorhergehenden Ansprüche, **dadurch gekennzeichnet, dass**
der in die Aufnahmevorrichtung (9,9') eingreifende Teil (11) des Haltelements (8,8') in geschlossenem Zustand des Behälters über eine Tiefe von 0,3 bis 1,5 mm und bevorzugt 0,5 bis 1 mm in die Aufnahmevorrichtung (9,9') eingreift; und/oder
der in die Aufnahmevorrichtung (9,9') eingreifende Teil (11) des Haltelements (8,8') in geschlossenem Zustand des Behälters über 5 bis 60 % und bevorzugt 20 bis 40 % der Gesamtumfangslänge in die Aufnahmevorrichtung (9,9') eingreift.

7. Behälter gemäß einem der vorhergehenden Ansprüche, **dadurch gekennzeichnet, dass**
n im Bereich von 3 bis 6 und bevorzugt im Bereich von 3 bis 5 liegt, besonders bevorzugt ist n 4.

8. Behälter gemäß einem der vorhergehenden Ansprüche, **dadurch gekennzeichnet, dass**
die Verschlusseinrichtung (2) vollständig im Inneren des Deckels (3) angeordnet ist.

9. Behälter gemäß einer der vorhergehenden Ansprüche, **dadurch gekennzeichnet, dass**
die Verschlusseinrichtung (2) einen Kunststoff enthält und vorzugsweise aus diesem besteht, wobei der Kunststoff besonders bevorzugt ausgewählt ist aus der Gruppe bestehend aus Acetalharzen, flüssigkristallinen Polymeren, Polyacrylaten, Polymethacrylaten, olefinischen und cycloolefinischen Polymeren, Polyamiden, Polyamidelastomeren, Polyamidimiden, Polyarylethern beeinhaltend Polyphenylether, Polycarbonaten, Polyimiden, Polyestern, Polyester-Polycarbonaten, Polyethern, Polyoxyethylenen, Polysulfonen, Polystyrol, vinylischen Polymere oder Mischungen hiervon.

10. Behälter gemäß einem der vorhergehenden Ansprüche, **dadurch gekennzeichnet, dass**
der obere Querschnitt (4) der Verschlusseinrichtung und/oder die Öffnung des Behälters kreisförmig sind.

11. Behälter gemäß einem der vorhergehenden Ansprüche, **dadurch gekennzeichnet, dass**
der Behälter (1) und/oder der Deckel (3) aus Edelstahl bestehen, bevorzugt ist, dass sowohl der Behälter (1) als auch der Deckel (3) aus Edelstahl bestehen.

12. Behälter gemäß einem der vorhergehenden Ansprüche, **dadurch gekennzeichnet, dass**
der Deckel (3) in Form eines Bechers ausgebildet ist, wobei dieser Becher bevorzugt doppelwandig ist.

13. Behälter gemäß einem der vorhergehenden Ansprüche, **dadurch gekennzeichnet, dass**
der Behälter (1) ausgewählt ist aus der Gruppe bestehend aus Isolierflaschen, Isolierbechern, Isolierbehältern, Vorratsbehältern mit und ohne Isolierfunktion.

## Claims

1. A container (1) having a closure device (2) and a cover (3), wherein
the closure device (2) has an upper cross-section (4) that is substantially of round, triangular, or polygonal shape; and
wherein at least two retaining elements (8, 8') are arranged in the region of the lower cross-section (5) at the closure device (2);
wherein the cover (3) has a reception device (9, 9') for the retaining elements (8, 8') of the closure device (2) that ensure that the cover (3) is retained by the closure device (2); and
wherein the container (1) has a substantially round opening into which the closure device (2) engages in the closed state of the container (1),
**characterized in that** this upper cross-section (4) merges into a lower non-round cross-section (5) that is defined by n corners (6) and by n arc-shaped lines (7) connecting these corners,
where n is a whole number from 2 to 6;
wherein the corners (6) project, viewed axially, over the substantially round, triangular, or polygonal upper cross-section (4) and the arc-shaped lines (7) are set back, viewed axially, behind the substantially round, triangular, or polygonal upper cross-section (4);

2. A container in accordance with claim 1, **characterized in that**
the closure device (2) has two retaining elements (8, 8') that are preferably arranged at oppositely disposed sides (10, 10') of the closure device (2).

3. A container in accordance with claim 1 or claim 2, **characterized in that**
the retaining elements (8, 8') are retaining webs; and/or
**in that** the reception devices (9, 9') are grooves,
wherein it is preferred that the retaining elements (8, 8') are retaining webs and the reception devices (9, 9') are grooves.

4. A container in accordance with one of the preceding claims,
**characterized in that**
the number of retaining elements (8, 8') corresponds to the number of corners (6).

5. A container in accordance with one of the preceding claims,
**characterized in that**
the upper cross-section (4) is of substantially round shape; and **in that** the reception device is a peripheral groove.

6. A container in accordance with one of the preceding claims,
**characterized in that**
the part (11) of the retaining element (8, 8') engaging into the reception device (9, 9') engages into the reception device (9, 9') over a depth of 0.3 to 1.5 mm and preferably 0.5 to 1 mm in the closed state of the container; and/or
**in that** the part (11) of the retaining element (8, 8') engaging into the reception device (9, 9') engages into the reception device (9, 9') over 5 to 60% and preferably 20 to 40% of the total peripheral length in the closed state of the container.

7. A container in accordance with one of the preceding claims,
**characterized in that**
n is in the range from 3 to 6 and preferably in the range from 3 to 5, particularly preferably n is 4.

8. A container in accordance with one of the preceding claims,
**characterized in that**
the closure device (2) is completely arranged in the interior of the cover (3).

9. A container in accordance with one of the preceding claims,
**characterized in that**
the closure device (2) comprises a plastic and preferably consists thereof, with the plastic particularly preferably being selected from the group comprising acetal resins, liquid crystal polymers, polyacrylates, polymethacrylates, olefinic and cycloolefinic polymers, polyamides, polyamide elastomers, polyamideimides, polyarylethers containing polyphenyl ethers, polycarbonates, polyimides, polyesters, polyesterpolycarbonates, polyethers, polyoxyethylenes, polysulfones, polystyrene, vinyl polymers or mixtures thereof.

10. A container in accordance with one of the preceding claims,
**characterized in that**
the upper cross-section (4) of the closure device and/or the opening of the container is/are circular.

11. A container in accordance with one of the preceding claims,
**characterized in that**
the container (1) and/or the cover (3) consist/consists of stainless steel, with it being preferred that both the container (1) and the cover (3) consist of stainless steel.

12. A container in accordance with one of the preceding claims,
**characterized in that**
the cover (3) is configured in the form of a tumbler, with this tumbler preferably being double-walled.

13. A container in accordance with one of the preceding claims,
**characterized in that**
the container (1) is selected from the group comprising vacuum flasks, insulated tumblers, insulated containers, and storage containers with and without an insulation function

## Revendications

1. Contenant (1) muni d'un dispositif de fermeture (2) et d'un couvercle (3),
le dispositif de fermeture (2) présentant une section transversale supérieure (4), qui est sensiblement de forme ronde, triangulaire ou polygonale, et
dans lequel au moins deux éléments de retenue (8,8') étant disposés au niveau du dispositif de fermeture (2), dans la zone de la section transversale inférieure (5) ;
dans lequel le couvercle (3) présentant un dispositif de réception (9,9') pour les éléments de retenue (8,8') du dispositif de fermeture (2), qui garantissent que le couvercle (3) est retenu par le dispositif de fermeture (2) ; et
dans lequel le contenant (1) présentant une ouverture sensiblement ronde, dans laquelle le dispositif de fermeture (2) entre en prise à l'état fermé du contenant (1),
**caractérisé en ce que** la section transversale supérieure (4) se prolonge en une section transversale inférieure (5), non ronde, qui est définie par n coins (6) et par n lignes arquées (7) reliant ces coins, où n est un nombre entier de 2 à 6 ;
dans lequel les coins (6), en vue axiale, faisant saillie au-dessus de la section transversale supérieure (4) sensiblement ronde, triangulaire ou polygonale et les lignes arquées (7), en vue axiale, faisant saillie derrière la section transversale supérieure (4) sensiblement ronde, triangulaire ou polygonale.

2. Contenant selon la revendication 1, **caractérisé en ce que**
le dispositif de fermeture (2) présente deux éléments de retenue (8,8'), qui sont disposés de préférence sur les côtés opposés (10,10') du dispositif de fermeture (2).

3. Contenant selon la revendication 1 ou 2, **caractérisé en ce que**
les éléments de retenue (8,8') sont des nervures de retenue ; et/ou
les dispositifs de réception (9,9') sont des rainures ;
il est préférable que les éléments de retenue (8,8') soient des nervures de retenue et que les dispositifs de réception (9,9') soient des rainures.

4. Contenant selon l'une quelconque des revendications précédentes,
**caractérisé en ce que**
le nombre d'éléments de retenue (8,8') correspond au nombre de coins (6).

5. Contenant selon l'une quelconque des revendications précédentes,
**caractérisé en ce que**
la section transversale supérieure (4) est sensiblement de forme ronde et, **en ce que** le dispositif de réception est une rainure circulaire.

6. Contenant selon l'une quelconque des revendications précédentes,
**caractérisé en ce que**
la partie (11) de l'élément de retenue (8,8') entrant en prise dans le dispositif de réception (9,9') à l'état fermé du contenant entre en prise sur une profondeur de 0,3 à 1,5 mm et de préférence de 0,5 à 1 mm dans le dispositif de réception (9,9') ; et/ou
la partie (11) de l'élément de retenue (8,8') entrant en prise dans le dispositif de réception (9,9') à l'état fermé du contenant entre en prise sur 5 à 60 % et de préférence de 20 à 40 % de la circonférence totale dans le dispositif de réception (9,9').

7. Contenant selon l'une quelconque des revendications précédentes,
**caractérisé en ce que**
n se situe dans la plage de 3 à 6 et de préférence dans la plage de 3 à 5, de manière particulièrement préférée n vaut 4.

8. Contenant selon l'une quelconque des revendications précédentes,
**caractérisé en ce que**
le dispositif de fermeture (2) est disposé entièrement à l'intérieur du couvercle (3).

9. Contenant selon l'une quelconque des revendications précédentes,
**caractérisé en ce que**
le dispositif de fermeture (2) contient une matière plastique et de préférence se compose de celui-ci, la matière plastique étant choisi de manière particulièrement préférée dans le groupe se composant de résines acétaliques, polymères cristallins liquides, polyacrylates, polyméthacrylates, polymères oléfiniques et cyclooléfiniques, polyamides, élastomères polyamides, polyamideimides, polyaryléthers incluant les polyphényléthers, polycarbonates, polyimides, polyesters, polyesterpolycarbonates, polyéthers, polyoxyéthylènes, polysulfones, polystyrène, polymères vinyliques ou des mélanges de ceux-ci.

10. Contenant selon l'une quelconque des revendications précédentes,
**caractérisé en ce que**
la section transversale supérieure (4) du dispositif de fermeture et/ou l'ouverture du contenant sont de forme circulaire.

11. Contenant selon l'une quelconque des revendications précédentes,
**caractérisé en ce que**
le contenant (1) et/ou le couvercle (3) sont en acier inoxydable, de préférence, **en ce que** aussi bien le contenant (1) que le couvercle (3) sont en acier inoxydable.

12. Contenant selon l'une quelconque des revendications précédentes,
**caractérisé en ce que**
le couvercle (3) est conçu sous la forme d'un gobelet, ledit gobelet étant de préférence à double paroi.

13. Contenant selon l'une quelconque des revendications précédentes,
**caractérisé en ce que**
le contenant (1) est choisi dans le groupe se composant de bouteilles isolantes, gobelets isolants, contenants isolants, réservoirs avec ou sans fonction isolante.
